Europäisches Patentamt

European Patent Office

Office européen des brevets

(11) Veröffentlichungsnummer: **0 041 266 B2**

## (12) NEUE EUROPÄISCHE PATENTSCHRIFT

(45) Veröffentlichungstag der neuen Patentschrift:
28.08.91 Patentblatt 91/35

(51) Int. Cl.⁵: **B23B 27/14, B23P 15/30**

(21) Anmeldenummer: **81104192.0**

(22) Anmeldetag: **02.06.81**

(54) **Mit Hartstoff beschichtete Messerplatte und Verfahren zu ihrer Herstellung.**

(30) Priorität: 03.06.80 DE 3020929

(43) Veröffentlichungstag der Anmeldung:
09.12.81 Patentblatt 81/49

(45) Bekanntmachung des Hinweises auf die
Patenterteilung:
19.10.83 Patentblatt 83/42

(45) Bekanntmachung des Hinweises auf die
Entscheidung über den Einspruch:
28.08.91 Patentblatt 91/35

(84) Benannte Vertragsstaaten:
AT BE CH DE FR GB IT LI NL SE

(56) Entgegenhaltungen:
DE-A- 1 942 955
JP-A-48 058 470
JP-A-53 083 177
US-A- 2 244 053
US-A- 2 598 581
US-A- 3 064 349
US-A- 3 250 154
US-A- 3 369 283
US-A- 3 963 366
US-A- 3 974 564
US-A- 4 159 884
Werkzeugmaschine International "Reiben mit
hohen Schnittgeschwindigkeiten", D. Kress,
1975, pp. 24,31,33-35,40,41,77,106

(56) Entgegenhaltungen:
Dubbel Taschenbuch für den Maschinenbau,
14. Aufl. S.991,994
Fertigungsverfahren Bd. 1, Drehen, Fräsen,
Bohren, W. König, 2. Auflage, Düsseldorf,
1984, S.91 u. 143
DIN 6581, S. 1,2
Meyers Lexikon der Technik und der exakten
Naturwissenschaften, Bd. 2, 1977, S.898
Duden, S.867
MAPAL, Bearbeitungsbeispiele für den Einsatz von MAPAL-Präzisionswerkzeugen zur
Feinarbeitung von Bohrungen
MAPAL, Prospektblatt, "Für Spitzenleistungen Kurzmesser-Reibahlen
"Die richtige Schneidengeometrie"
SANDVIK, Hartmetallwerkzeuge zur Verwendung auf Automaten
SANDVIK, Coromant Drehwerkzeuge

(73) Patentinhaber: MAPAL Fabrik für
Präzisionswerkzeuge Dr. Kress KG
Obere Bahnstrasse 13 Postfach 1520
W-7080 Aalen (DE)

(72) Erfinder: Kress, Dieter, Dr. Dipl.-Ing.
Walkstrasse 87
W-7080 Aalen (DE)
Erfinder: Häberle, Friedrich
Fliederstrasse 14
W-7081 Lauchheim (DE)

(74) Vertreter: Gleiss, Alf-Olav, Dipl.-Ing.
Patentanwalt Silberburg Strasse 187
W-7000 Stuttgart 1 (DE)

## Beschreibung

Die Erfindung betrifft eine mit Hartstoff beschichtete, eine Haupt- und Nebenschneide aufweisende Hartmetall-Messerplatte für Spanwerkzeuge sowie ein Verfahren zu deren Herstellung.

Es ist bekannt, Schneiden von aus Hartmetall und gehärtetem Schnellstahl bestehenden Zerspanungswerkzeugen mit einer dünnen Schicht von verschleißfestem Hartstoff, beispielsweise Titannitrid zu überziehen, um die Zerspanungsgeschwindigkeit erhöhen zu können und um die Gefahr des Ausbrechens der Schneidkanten zu vermeiden. So beschichtete, eine erhöhte Standzeit aufweisende Zerspanungswerkzeuge werden jedoch nur für hohe Zerspanungsleistungen und für verhältnismäßig große Schnittiefen verwendet, wie sie beim Drehen und Fräsen gefordert werden. Derartige Beschichtungen sind auch aus den JP-OS 48-58 470 und 53- 83 177 für der Grob-Zerspanung dienende Messerplatten bekannt. Auch sie dienen dazu, ein Ausbrechen der Schneiden zu verhindern und damit die Standzeit der Messerplatten zu erhöhen. Für die Feinbearbeitung von Bohrungen, das heißt beim Bearbeiten von Bohrungen mit nur geringen Schnittiefen und auch bei geringen Schnittgeschwindigkeiten wurden, solche beschichteten Werkzeuge bislang nicht verwendet, was seinen Grund darin hat, daß an Schneiden für die Feinbearbeitung andere Anforderungen als an Schneiden für die Grob-Zerspanung gestellt werden und daß diese auch anderen Verschleißerscheinungen unterworfen sind. Bei der Feinbearbeitung von Bohrungen spielt im Gegensatz zu der Grob-Zerspanung nicht die Warmfestigkeit eine entscheidene Rolle, sondern der vor allem an der Freifläche auftretende Verschleiß.

Bei der Feinbearbeitung weisen die Schneiden einen verhältnismäßig flachen Anstellwinkel und einen Schneidkantenradius auf, der höchstens etwa 5 μm beträgt. Ein solcher Schneidkantenradius ist beim Beschichten einer Messerplatte unabhängig von seiner Größe vor dem Besichten nicht zu erzielen, er beträgt meist mehr als 30 μm.

Der Erfindung liegt daher die Aufgabe zugrunde, die Vorteile beschichteter Schneiden auch für die Feinbearbeitung von Bohrungen nutzbar zu machen. Hierbei muß jedoch die Tatsache berücksichtigt werden, daß die an eine Schneide zu stellenden Anforderungen bei einer Zerspanung, wie sie beim Reiben und bei der Feinbearbeitung von Bohrungen auftritt, und auch die an der Schneide auftretenden Verschleißerscheinungen andere sind, als bei der Grob-Zerspanung. Um der Funktion einer Schneide in ihren verschiedenen Bereichen Rechnung zu tragen, muß die Schneide in dem Schneidenbereich, in dem die Schnittiefe ihren geringsten Wert hat und die Schneide überwiegend auf Abrieb beansprucht wird, einen Schneidkantenradius vorzugsweise von weniger als 5 um aufweisen, während in dem einen größeren Anstellwinkel aufweisenden Anschnittbereich der Schneidkantenradius einen wesentlich höheren Wert aufweisen kann.

Diese Aufgabe wird gemäß der Erfindung durch eine Ausbildung der Messerplatte gelöst, die die Merkmale des Patentanspruchs 1 und vorzugsweise die Merkmale des Anspruchs 2 aufweist. Da eine Teilbeschichtung einer Messerplatte nur mit Schwierigkeiten durchführbar ist und außerdem bei Durchführung einer Teilbeschichtung für den Radius der Nebenschneidenkante nicht der erforderliche sehr kleine Wert erzielbar ist, wird gemäß der Erfindung vorgeschlagen, zur Herstellung einer so unterschiedlich beschichteten Messerplatte ein Verfahren anzuwenden, das die Merkmale des Anspruchs 3 aufweist.

Diese Aufgabe wird auch durch ein Verfahren zum Herstellen einer Messerplatte gemäß Oberbegriff des Anspruchs 3 gelöst, das sich durch die in diesem Anspruch angegebenen Verfahrensschritte auszeichnet.

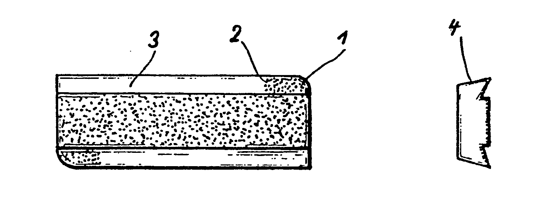

In der Zeichnung ist eine Messerplatte gemäß der Erfindung in einer Draufsicht auf die Vorderfläche und einer Seitenansicht dargestellt.

Die Spanfläche des überwiegend einem Kolkverschleiß unterworfenen Bereichs 1 und die des an diesen angrenzenden Bereichs 2 sind, wie auch der gesamte Freiflächenbereich 4, mit Hartstoff beschichtet. Bis auf die blank geschliffene Spanfläche 3 der Nebenschneide sind auch die übrigen Flächen der Messerplatte mit Hartstoff beschichtet.

## Patentansprüche

1. Mit Hartstoff beschichtete, eine Haupt- und eine Nebenschneide aufweisende Hartmetall-Messerplatte für Spanwerkzeuge, **dadurch gekennzeichnet,** daß sie ausschließlich zur Feinbearbeitung von Bohrungen vorgesehen ist, wobei Haupt- und Nebenschneide praktisch in einer Flucht liegen und der Hartstoff von der Spanfläche (3) im Bereich der Nebenschneide, und vorzugsweise auch in dem der Nebenschneide benachbarten, überwiegend auf Abrieb beanspruchten Teilbereich (2) der Hauptschneide abgetragen ist, wobei der beschichtete Freiflächenbereich (4) und die übrigen beschichteten Flächen unbearbeitet bleiben.

2. Messerplatte nach Anspruch 1, **dadurch gekennzeichnet,** daß der Schneidkantenradius am Übergang von der unbeschichteten Spanfläche (3) der Nebenschneide zu der beschichteten Freifläche (4) etwa kleiner gleich 5 um ist.

3. Verfahren zum Herstellen einer Messerplatte nach den Ansprüchen 1 bis 2 unter bei Werkzeugen zur Grob-Zerspanung bekannter Beschichtung der Messerplatte mit Hartstoff, **dadurch gekennzeich-**

net, daß die gegenüber dem fertigen Messer mit einem Aufmaß von ca. 0.05 mm mit einem Schälanschnitt von ca. 4° geschliffene Messerplatte mit Hartstoff beschichtet und anschließend die Hartstoffschicht der Spanfläche im Bereich (3) der Nebenschneide und in dem überwiegend auf Abrieb beanspruchten Bereich (2) der Hauptschneide abgeschliffen wird.

## Claims

1. Hard-metal cutting bit for chipping tools, comprising a main and a secondary cutting edge, covered with hard material, **characterised in that** it is provided for fine-machining of bores only, in which respect the main and the secondary cutting edge are practically flush and the hard material is worn from the chipping surface 3 in the area of the secondary cutting edge, and preferably also from the portion (2) of the main cutting edge which is adjacent to the secondary cutting edge and mainly used for rubbing, whereby the coated free surface area (4) and the remaining coated surfaces remain unprocessed.

2. Cutting bit according to claim 1, **characterised in that** the cutting-edge radius at the transition from the not coated chipping surface (3) of the secondary cutting edge to the coated free surface (4) is somewhat smaller around 5 um.

3. Method for the manufacture of a cutting bit according to claims 1 to 2 with the cutting bit coated with hard material in a manner known with respect to tools for rough-chipping, **characterised in that** the cutting bit, which is ground relative to the finished blade with a measurement of approximately 0.05 mm and a planing angle of approximately 4°, is coated with hard material, and in that the hard-material layer of the chipping surface in the area (3) of the secondary cutting edge and in the area (2) of the main cutting edge, which is mainly used for rubbing, is subsequently ground off.

## Revendications

1. Plaquette de coupe en métal dur destinée à des outils d'usinage par enlèvement de matière, recouverte d'une substance dure et présentant un tranchant principal et un tranchant secondaire, caractérisée en ce qu'elle est prévue exclusivement pour le finissage d'alésages, le tranchant principal et le tranchant secondaire étant situés pratiquement en alignement, et la substance dure étant enlevée de la face d'attaque (3) dans la région du tranchant secondaire, et de préférence également dans la région partielle (2) du tranchant principal qui est voisine du tranchant secondaire et qui est sollicitée principalement en abrasion, la région recouverte de la face de dépouille (4) et les autres faces recouvertes de substance dure ne subissant pas l'enlèvement précité.

2. Plaquette de coupe selon la revendication 1, caractérisée en ce que le rayon de tranchant à la transition entre la face d'attaque non recouverte (3) du tranchant secondaire et la face de dépouille recouverte (4) est approximativement inférieur ou égal à 5 µm.

3. Procédé de fabrication d'une plaquette de coupe selon les revendications 1 et 2, en recouvrant la plaquette de substance dure comme cela est connu pour des outils d'usinage grossier par enlèvement de matière, caractérisé en ce que la plaquette est recouverte de substance dure avec une surcote d'environ 0,05 mm par rapport à la plaquette de coupe définitive et avec une entrée de coupe d'environ 4°, puis la couche de substance dure est enlevée par meulage de la face d'attaque dans la région (3) du tranchant secondaire et dans la région (2) du tranchant principal qui est sollicitée principalement en abrasion.